# EUROPEAN PATENT SPECIFICATION

(11) **EP 1 033 865 B1**
(45) Date of publication and mention of the grant of the patent: **17.03.2010**
(21) Application number: 99121578.1
(22) Date of filing: 29.10.1999
(51) Int. Cl.: H04N 1/00

(54) **Image data commumication device and communication method thereof**
Bilddatenübertragungsgerät und Uebertragungsverfahren dafür
Dispositif de communication de données d'image et procédé de communication pour ceci

(30) Priority: 04.03.1999 JP 5649399
(43) Date of publication of application: 06.09.2000
(60) Divisional application: 10150642.6
(73) Proprietor: Panasonic Communications Co., Ltd., Fukuoka-shi, Fukuoka 812-8531 (JP)
(72) Inventor: Ogawa, Hidehiko, Yokohama-shi, Kanagawa 244-0805 (JP)
(74) Representative: Grünecker, Kinkeldey, Stockmair & Schwanhäusser Anwaltssozietät

(56) References cited:
- EP-A- 0 801 492
- EP-A- 0 812 100
- EP-A- 0 845 894
- US-A- 5 675 507

## Description

### Field of the Invention

The present invention relates to an image-data-communication-device utilizing communication apparatus such as a network-facsimile-apparatus, and a communication method of the image data.

### Background of the Invention

When a user sends data through a facsimile machine, the data contains, in general, transmitter's identification. The transmitter's identification has been usually registered at the facsimile machine, and is overwritten on an image data or printed on the upper end of the image data received by a recipient.

The transmitter's identification is generally input to the facsimile machine through its operation panel. Identification data created by a personal computer (PC) can be also sent into a facsimile machine via PSTN (Public Switched Telephone Network).

On the other hand, the registration through E-mail (electronic mail) can be practiced in a net-work facsimile which communicates through a network such as the Internet.

As discussed above, using a regular facsimile machine, a recipient can identify who sends a message even it has no name in the "From: " column, because transmitter's identification is overwritten on the message or printed on the upper end of the received paper.

However, in the case of the network facsimile, a message does not always arrive at a facsimile machine, but it may arrive at a terminal of a PC or a workstation, which is capable of receiving E-mail. In such a case, the terminal confirms the arrival of data by an E-mail-browsing-software, and since the message is sent in a form of attached file of E-mail, a recipient cannot identify who sent the message until the recipient reads the attached file.

When the recipient answers the message through a reply function of the browsing software, the answer is always sent back to the facsimile machine that has sent the message. Therefore, if an intended person does not watch the machine for the arrival of answer, or another person attends to the machine, the answer is sometimes misplaced or delivered to a wrong address.

Further, an operation panel of facsimile machines is not good for registering multi-digit data such as a mail address, and it takes time. On the other hand, registration through PSTN requires a dedicated program at a PC side, and this method thus does not become popular. The registration through E-mail allows a simple input operation; however, a format readable by a facsimile machine must be employed. Thus the operator must be furnished with some knowledge before registering a mail address.

For example, such a network facsimile is taught in ISHIBASHI et al. (EP 0 812 100) and TOYODA et al. (EP 0 801 492). ISHIBASHI et al. relate to a communication terminal apparatus, which has a RAM7 including a user table. A user name expressing a user corresponding to a password is selected from the user table in the communication terminal apparatus by the inputting of the password. On the other hand, TOYODA et al. relate to an electronic mail system which receives an e-mail including image data and stores the image data. When a user inputs a password, the electronic mail system outputs the stored image data corresponding to the input password.

### Summary of the Invention

Accordingly, it is an object of the present invention to provide a communication device and a method of communication, through which a recipient can identify a transmitter before opening a file attached to a mail when the recipient receives thE-mail by a mail-browsing-software.

It is yet another object of the present invention to provide a communication device and a method of communication, through which a transmitter can send an answer to an intended person when the transmitter uses a reply function of thE-mail-browsing-software.

It is still another object of the present invention to provide a communication device and a method of communication, at which a transmitter's identification can be registered with a simple operation free from any special knowledge.

A communication device and method of the present invention are defined in the claims.

Using the communication device having the elements discussed above, when a transmitter sends image data by E-mail over the Internet, an operator (in most cases the transmitter is an operator) puts the identification in a "From: " column for each mail based on an transmitter's intention. A recipient then can identify the transmitter before opening a file attached to the image data. When the recipient answers thE-mail using a reply function of thE-mail-browsing-software, this communication device allows the answer-data to reach an intended person.

This structure keeps this communication device from outputting the registered data or HTML (Hyper Text Markup Language) document for data input against a request. This request comes from a host or an address alien from the registered host or IP (Internet Protocol) addresses, and requires the device to read out the registered document or a screen for registration according to the HTTP (Hyper Text Transfer Protocol.)

Therefore, the communication device of the present invention allows an transmitter's identification to be registered or read out only when a registered host or an registered-IP-address-holder make a request. The identifications are thus kept in confidential to non-registered hosts and IP addresses.

### Brief Description of the Drawings

Fig. 1 is a block diagram illustrating an entire communication device in accordance with an exemplary embodiment of the present invention.
Fig. 2 is a schematic diagram illustrating a transmitter's identification in accordance with the exemplary embodiment of the present invention. Fig. 2A shows a default of the transmitter's identification, and Fig. 2B shows a table of transmitter's identification.
Fig. 3 is a flowchart depicting an operation for changing transmitter's name.
Fig. 4 is a flowchart depicting an operation for changing a name and a mail address of transmitter.
Fig. 5 shows a mail format in accordance with SMTP (SimplE-mail Transfer Protocol) standard used in the exemplary embodiment. Fig. 5A shows a basic mail-format. Fig. 5B shows a format where a transmitter's name is changed, and Fig. 5C shows a format where a name and a mail address of transmitter are changed. Fig. 5D through Fig. 5F show formats where transmitter's namE-mail address, and mail command are changed.
Fig. 6 is a flowchart depicting an operation in accordance with the exemplary embodiment of the present invention for reading out an input screen used for registering a transmitter's identification at a transmitter's ID table.
Fig. 7 is a flowchart depicting an operation in accordance with the exemplary embodiment of the present invention for reading out the transmitter's identification from the transmitter's ID table.
Fig. 8 is a flowchart depicting an operation in accordance with the exemplary embodiment of the present invention for registering the transmitter's identification at the transmitter's ID table.
Fig. 9 shows a table where identification has been registered. Fig. 9(a) shows the transmitter's ID table, and Fig. 9(b) shows a host name table.
Fig. 10 shows an HTML document where transmitter's IDs are to be registered in accordance with the exemplary embodiment of the present invention.
Fig. 11 depicts a process of exchanging information between servers on the Internet communication in accordance with the exemplary embodiment of the present invention.
Fig. 12 shows schematically a verification procedure of an IP address and a host name. Fig. 12A shows a verification procedure of the IP address without a mask, Fig. 12B shows a procedure of the IP address with a mask, and Figs. 12C and 12D show procedures of the host name.

### Detailed Description of the Exemplary Embodiment

An exemplary embodiment of the present invention is described hereinafter with reference to the accompanying drawings.

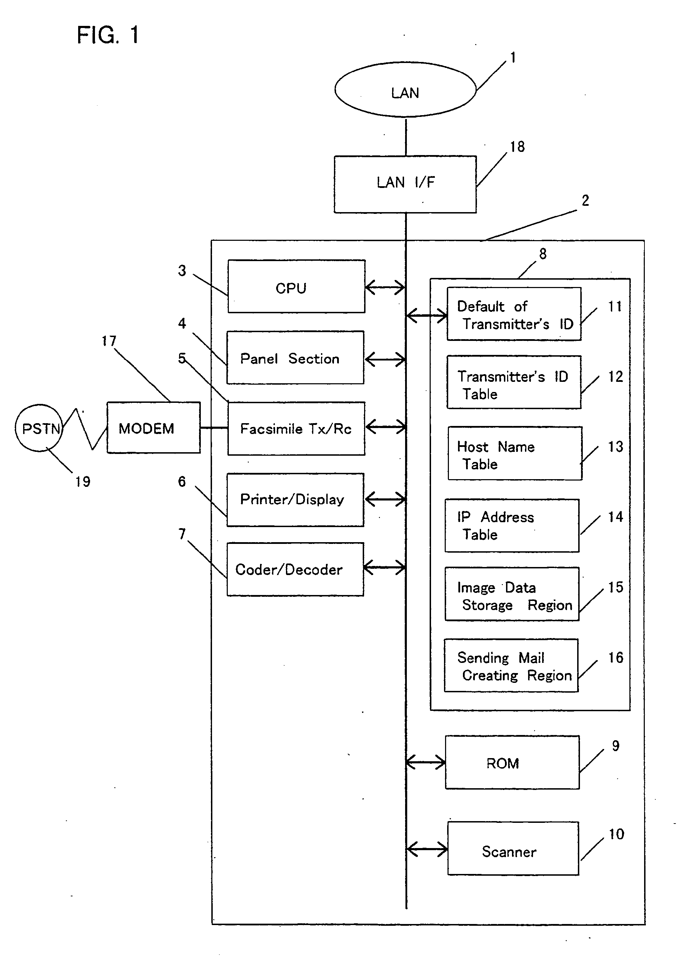

Fig. 1 is a block diagram illustrating an entire communication device in accordance with an exemplary embodiment of the present invention. LAN (local area network) line 1 is coupled to communication device 2 via LAN interface 18.

Communication device 2 sends and receives image data via LAN-line 1 or PSTN 19, and is furnished with sending/receiving functions of facsimile and E-mail. In Fig. 1, these functions are integrated and housed into a cabinet, which is called communication device 2. Respective functions and sections can be housed into a few boxes, which can be integrated into a system to function as communication device 2. For instance, a PC having a separated scanner and printer can be used as device 2.

As shown in Fig. 1, communication device 2 comprises the following elements:
(a) CPU 3 (central processing unit) for controlling the entire operation of device 2;
(b) panel section 4 for setting an operation and controlling the operation of device 2 through operation keys and buttons;
(c) fax (facsimile) communication section 5 for sending/receiving data;
(d) recording section 6 for recording the received data on a sheet of paper or displaying thereof on a display device;
(e) scanner 10 for taking in image data to be sent as electrical signals;
(f) coding section 7 for coding or decoding image data;
(g) memory 8 for storing transmitter's identifications, image data to be sent, and sent-out mail data;
(h) ROM 9 (read only memory) for storing an operation program of device 2.

Coding section 7 encodes the image data taken in by scanner 10 into binary data, or decodes the binary data received through E-mail and converted into facsimile format. In other words, coding section 7 has functions for converting image data into an E-mail format or the facsimile format, converting the respective formats into the other, and compressing or de-compressing data when necessary.

Memory 8 comprises the following elements:
(g-1) default of transmitter's identification 11;
(g-2) transmitter's IDs table 12;
(g-3) host name table 13;
(g-4) IP address table 14;
(g-5) image data storage region 15; and
(g-6) sending mail creating region 16.

The default of transmitter's identification 11 stores transmitter's name and his/her mail addresse of communication device 2 in pairs, and sets transmitter's identifications. Transmitter's IDs table 12 stores respective transmitter's identifications following the default of transmitter's identification 11, thus table 12 is capable to store a plurality of transmitter's identifications. Communication device 2 is usually used by a plurality of users, and when each user uses respective identifications proper to him/her, a plurality of transmitter's identifications are registered. If communication device 2 is exclusively used by one user, a plurality of transmitter's identifications need not to be registered; however, a transmitter's name and mail address are the minimum requirement as a transmitter's identification. In addition to these, a company name, TEL No. and Fax No. are used depending on needs. Therefore, plural pieces of information are registered at communication device 2 regardless of a number of users.

Names of CPUs linked to communication device 2 have been registered at host-name-table 13 of device 2. In the same manner, IP addresses have been registered at IP address table 14. Image-data-storage-region 15 stores the image data taken in with scanner 10. Sending-mail-creating-region 16 converts the image data stored in storage-region 15 into an E-mail format, thereby creating image data to be sent by E-mail. A given operation at panel section 4 allows CPU 3 to control this E-mail image data, and thereby sending the image data to another communication device 2 via LAN line 1 and over the Internet. This procedure is detailed later.

Modem 17 is connected to fax communication section 5, and sends/receives data via PSTN 19.

A basic operation of sending/receiving image data in this embodiment is described hereinafter. In the first place, sending/receiving image data through E-mail is described.

First, set a message to be sent at scanner 10, then input a mail address of a recipient through operation panel 4. Second, push the start button on panel 4, then CPU starts to work according to the program stored in ROM 9, so that scanner 10 reads the message. The image data read out by scanner 10 is coded into binary data by coding section 7, and stored into image-data-storage-region 15 in memory section 8. The stored image data is converted into an E-mail format by sending-mail-creating-region 16. Through this conversion, the image data is converted into text-code with 7-bit in accordance with "Mime" (Multipurpose Internet Mail Extensions) well-known as an E-mail standard of the Internet.

The image data converted into E-mail format is sent via LAN line 1 as an E-mail according to the message-transfer-protocol of E-mail.

At this time, when an operator does not specify a transmitter's identification, the transmitter's identification stored in the default of transmitter's identifications 11 is attached to this E-mail as a piece of E-mail information. If the operator operates panel-section 4 and sets a transmitter's identification to be attached to this E-mail, or selects a specific identification among those stored in transmitter's IDs table 12, the set or selected identification is attached to the E-mail and sent out. The transmitter's identification is detailed later.

ThE-mail information thus produced in sending-mail-creating-region 16 is sent to the recipient together with the transmitter's identification as an E-mail between LAN or over the Internet according to a protocol like SMTP. The recipient is thus able to see the transmitter's identification on the E-mail without opening an attached file including the image data.

On the other hand, when the image data read out by scanner 10 is sent through a fax machine, the image data is supplied to fax-sending-section 5, and then the image data is sent to a recipient's fax machine via PSTN 19. The transmitter's identification has been stored in fax-sending-section 5, and is overwritten on the message or printed on the upper end of the message sheet before the message is sent out.

In the description, scanner 10 reads the message to produce image data; however, the image data can be created on a PC screen, and directly converted to the binary data by coding section 7.

In the next place, the case where communication device 2 receives the image data is described. When device 2 receives the image data in E-mail format via LAN-line 1, the recipient is able to see the image data together with the transmitter's identification on E-mail screen. The received image data is stored in sending-mail-creating-region 16, and can be printed on paper as a piece of fax information as well as seen on E-mail screen. The received image data is inversely converted into binary data, which is a fax format, in creating-region 16, and then decoded into visible data i.e. the printable data, by coding section 7. Then the data is printed by recording section 6. The image data thus received as visible image on paper.

When the image data is received via PSTN 19 by a regular fax machine, the image data is printed by recording section 6 via fax-sending-section 5 in a usual manner.

A method of creating a transmitter's identification is described.

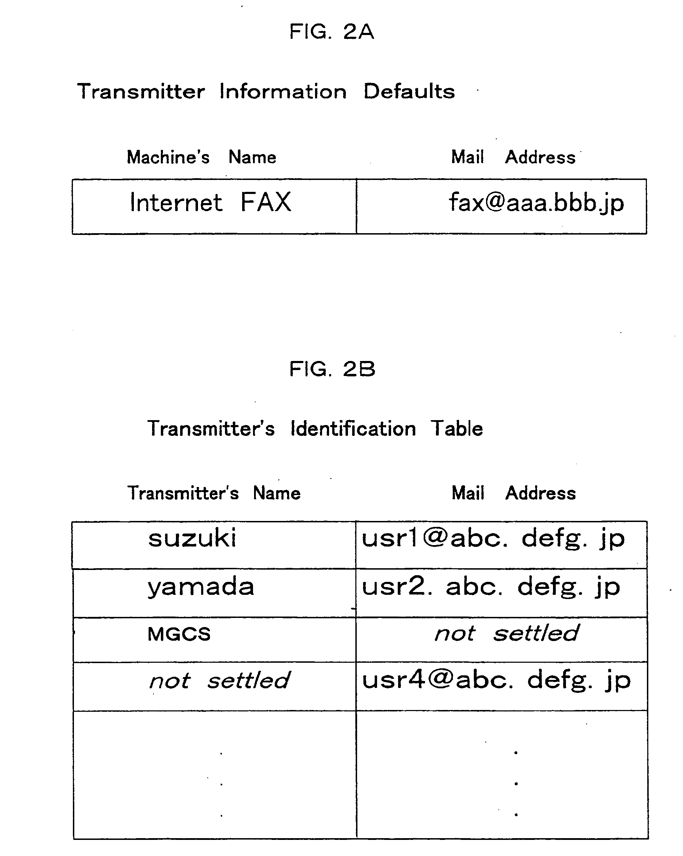

Fig. 2A shows a default proper to a fax machine, and Fig. 2B shows a transmitter's identifications (IDs) table. As shown in Fig. 2A, the default stores a machine's name and address in pairs. A machine's name is usually shown by using this default and an error mail is returned to the machine's address also by using this default.

As previously described, communication device 2 is generally used by a plurality of users. When each user establishes his/her own transmitter's identification, those identifications must be registered and displayed. Fig. 2B shows the table where a plurality of users are registered. They include respective users' names, and mail addresses. A method of registration is described later.

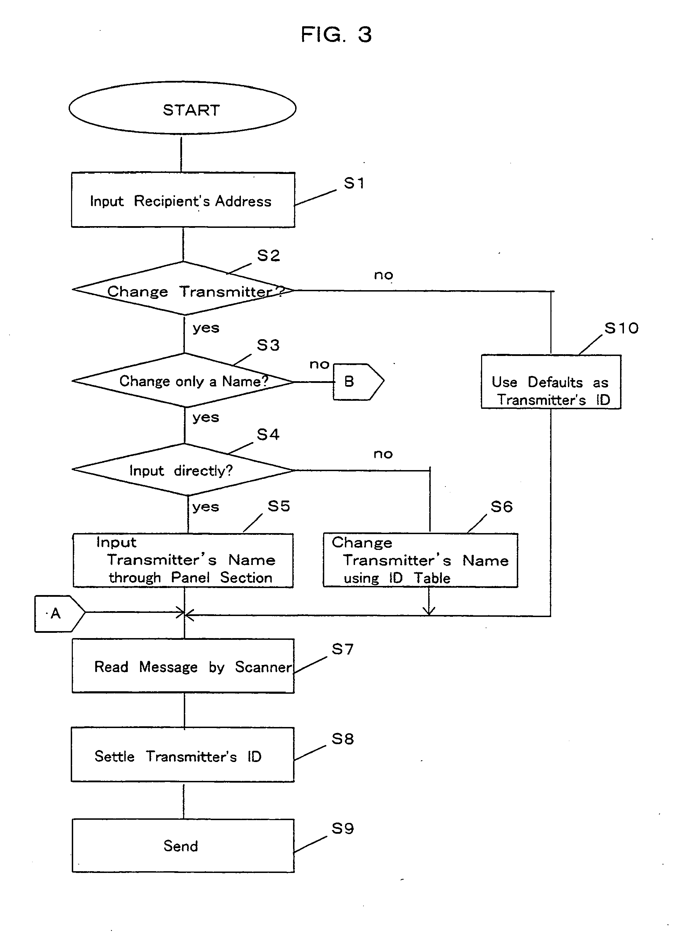

When the users do not specify their own identifications, the default shown in Fig. 2A, i.e. the machine's name and mail address proper to communication device 2 is, in general, automatically attached to a message to be sent. If a transmitter wants to attach another identification than those proper to device 2, e.g. his/her own name and mail address, the machine's identification proper to device 2 must be changed. In this case, it can be changed directly by inputs through panel section 4, or by using the transmitter's IDs table. The change operation is described with reference to the flowchart in Fig. 3.

In Step 1 (Step is called hereinafter "S"), input a recipient's address through panel section 4. Then, in S2, input whether a transmitter's identification should be changed or not. If the change is needed, select which is to be changed, i.e. only a name, or a name and address, in S3 through panel section 4. When a name only is changed, select which method is taken, i.e. input a new name of the transmitter directly through panel 4, or change the name at the transmitter's IDs table (refer to Fig. 2B) in S4. When the name is input through panel 4, go to S5 and input the transmitter's name directly. Then, go to S7, where scanner 10 reads a message, and set the name as a transmitter's identification in S8. Finally, in S9, send it according to thE-mail transfer protocol of E-mail.

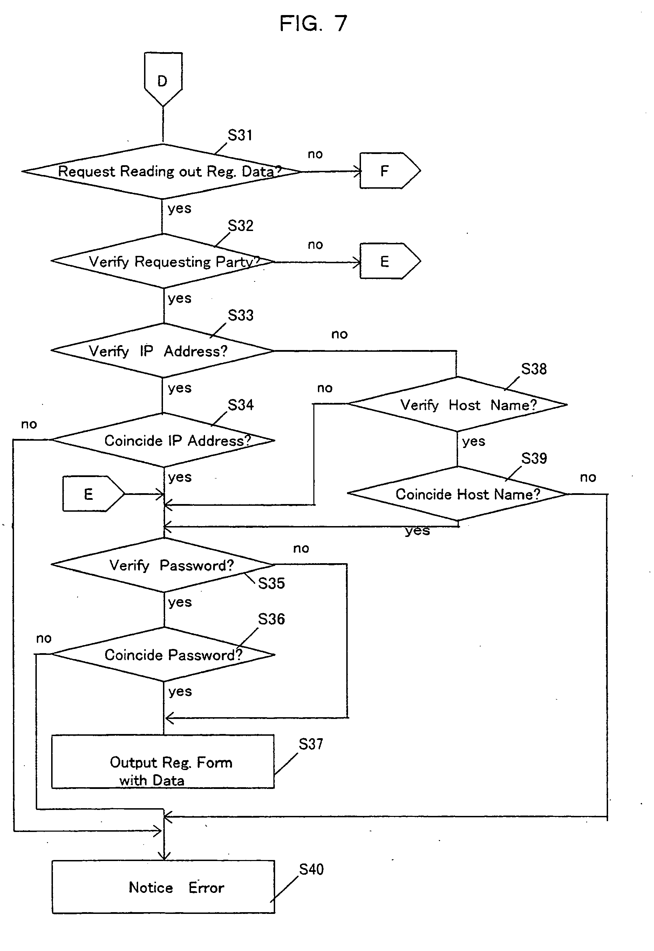

In S4, when selecting the transmitter's IDs table for changing the name of transmitter, select his/her own name referring to the table in S6. A method of selecting his/her own name is described later by referring to Fig. 7. Then, follow the same procedure as discussed above, namely, go to S7 where scanner 10 reads the message, and set the name as a transmitter's identification in S8. Finally, send it out in S9.

On the other hand, when selecting "not to change the name" in S2, use the default (refer to Fig. 2A) as the transmitter's identification in S10, then go to S7 and follow the same procedure as discussed above.

In the respective cases discussed above, the default is still used as thE-mail address of the transmitter, so that an error mail or a reply returns to or reaches to communication device 2.

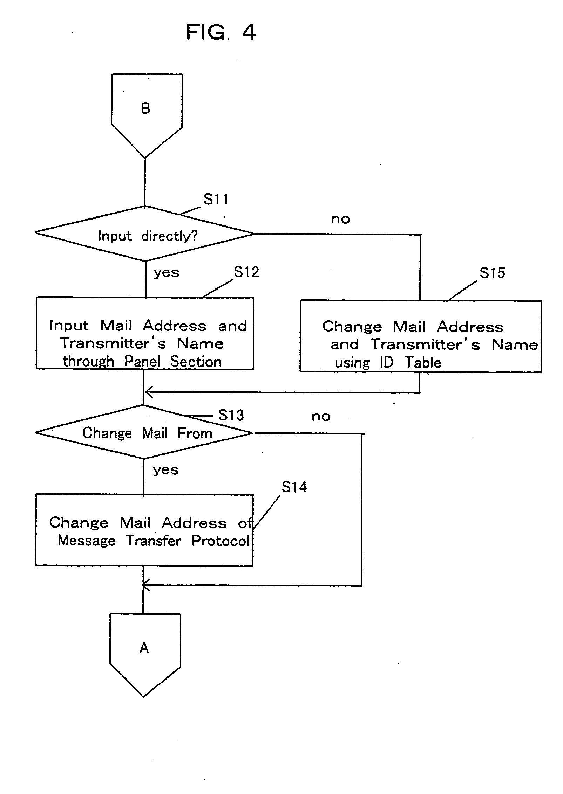

In S3 of the flowchart shown in Fig. 3, when changing both the name and mail address is selected, the procedure shown in Fig. 4 follows.

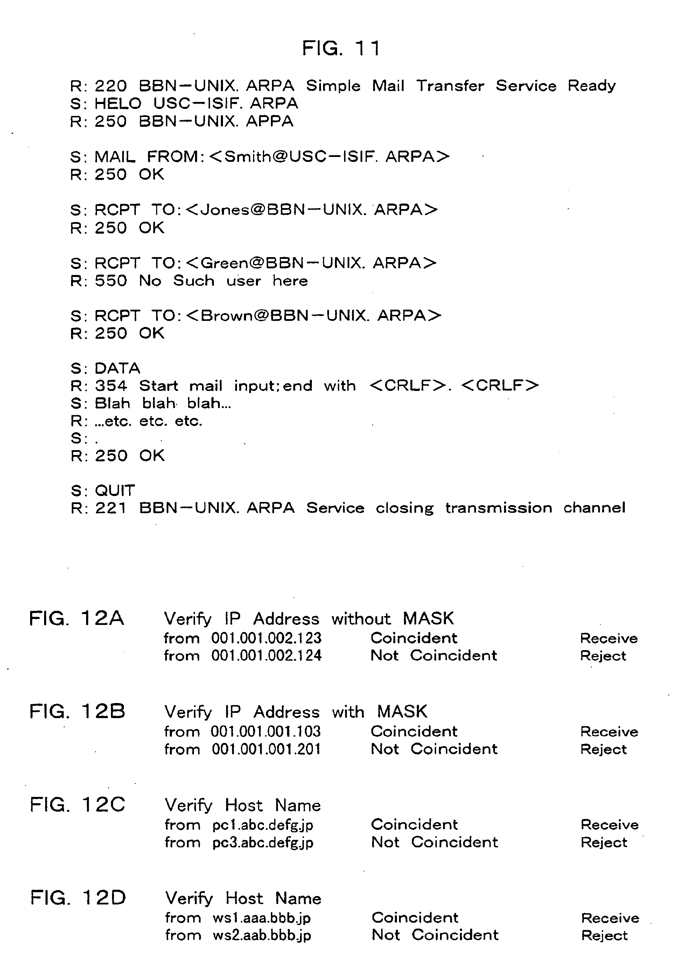

Fig. 4 is a flowchart depicting an operation of changing both the name and mail address. In S11, select which methods to be taken, i.e. input these two factors directly through panel 4, or change these factors in the IDs table. In a case of inputting them directly through panel 4, input the name and mail address directly through panel 4 in S12. Then, in S13, select whether thE-mail address noticed by thE-mail From command is changed or not. ThE-mail From command is issued between servers, more specifically, this command is available in the information flow (refer to Fig. 11, line 4) between the servers, and usually utilized in returning an error mail.

In a case of changing thE-mail From command, change thE-mail address of the command in the message transfer protocol in S14. Then, go to S7 and follows the steps shown in Fig. 3. If thE-mail From command is not changed in S13, go to S7 and follows the steps shown in Fig. 3.

On the other hand, when the name and mail address of the transmitter are changed by using the IDs table, change these two factors in the table in S15, then go to S13 and follows the steps onward. A method of selecting the transmitter's identification is detailed later by using Fig. 7.

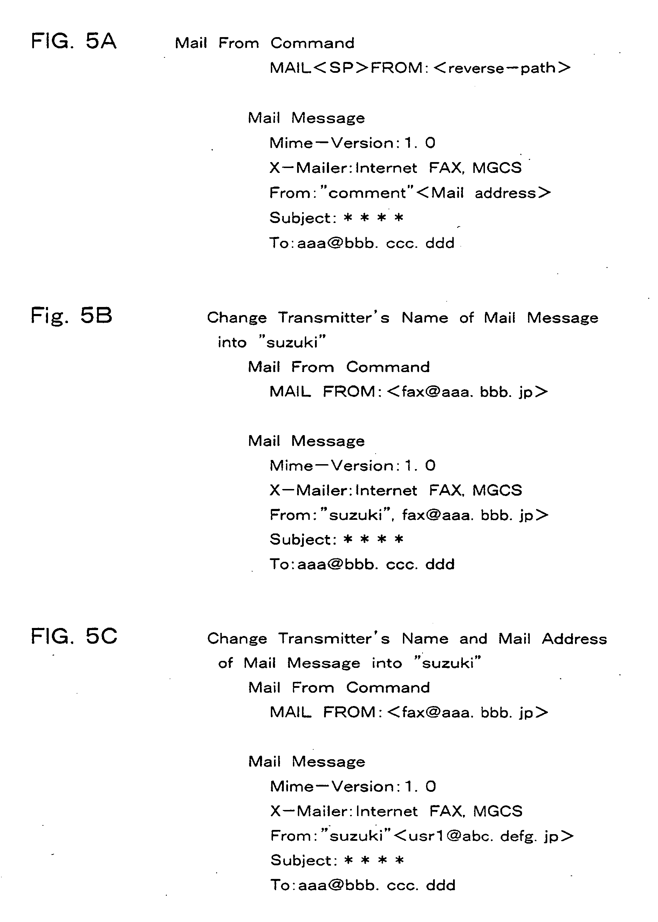

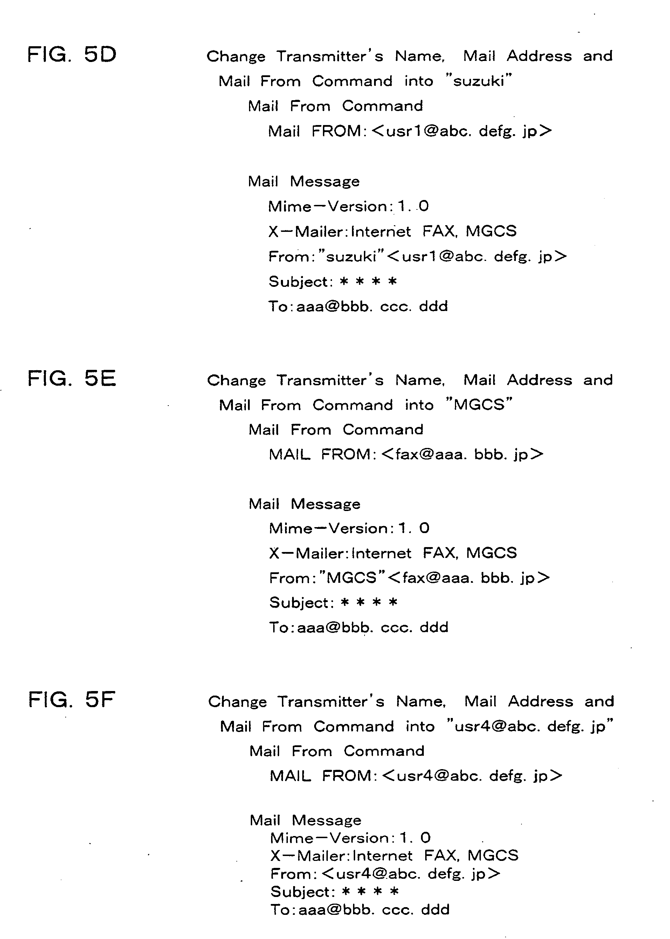

Fig. 5A through Fig. 5F show a mail format in accordance with SMTP standard. Fig. 5A shows a basic mail-format. Fig. 5B shows a format where a transmitter's name is changed, and Fig. 5C shows a format where a name and a mail address of transmitter are changed. Fig. 5D through Fig. 5F show formats where transmitter's namE-mail address, and thE-mail From command are changed.

ThE-mail format, as shown in Fig. 5A, has thE-mail From command and a mail message. The command indicates thE-mail address of the transmitter, and a reply to an error mail reaches this mail address. ThE-mail message indicates therein a version No. of the Mime that is one of E-mail standard functions, mail software (X-Mailer: ), transmitter's name (comment) and thE-mail address (Mail address), which make up the transmitter's identification, and "Subject: ", as well as "To:

Fig. 5B - Fig. 5F show examples of which mail formats have been changed according to the transmitter's IDs table shown in Fig. 2B. Fig. 5B shows an example where only a transmitter's name of a mail message has been changed to "suzuki". In this case, thE-mail From command and thE-mail address of mail message remain the default, an error mail is returned to "fax@aaa.bbb.jp", i.e. "Internet FAX" as the machine's name of communication device 2.

Fig. 5C shows an example where the transmitter's name and mail-address are changed to "suzuki". In this case, an error message is also returned to "Internet FAX", i.e. machine's name of communication device 2.

Fig. 5D shows an example where the transmitter's namE-mail-address and thE-mail From command are all changed to "suzuki". In this case, an error mail is returned to thE-mail address of "suzuki", the transmitter, i.e. "usr1@abc.defg.jp".

Fig. 5E shows an example where the transmitter's namE-mail-address and thE-mail From command are all changed to "MGCS". As shown in Fig. 2B, the transmitter's name "MGCS" does not have a mail-address, therefore, a default mail-address, i.e. "fax@aaa.bbb.jp", is used as a mail-address. In this case, an error mail is returned to the machine's name "Internet FAX" of communication device 2.

Fig. 5F shows an example where the transmitter's namE-mail-address and Mail From command are all changed to "usr4@abc.defg.jp". As shown in Fig. 2B, the transmitter's name "usr4@abc.defg.jp" does not have a mail address, thus "comment" of the transmitter is omitted. In this case, an error mail is returned to thE-mail address, i.e. "usr4@abc.defg.jp".

Sending the transmitter's identification is noticed in the text of thE-mail-message and in the data of message-transfer-protocol of E-mail. For instance, when the transmitter's identification is thE-mail-address, it is notified as a mail-address of a transmitter of E-mail message-transfer-protocol and a mail-address of a "From: " column in a message text.

ThE-mail-address cannot be notified to the E-mail transfer message protocol, but it can be notified only to thE-mail-address of "From: " column in thE-mail-message of E-mail.

When a transmitter's identification is his/her mail-address and his/her name, the identification is notified as a mail-address and a comment in the "From: " column of thE-mail-message of E-mail.

When the transmitter's identification is his/her name, the identification can be notified as a comment in the "From: " column in the message of E-mail.

Next, a method of registering and reading-out a transmitter's identification is described hereinafter.

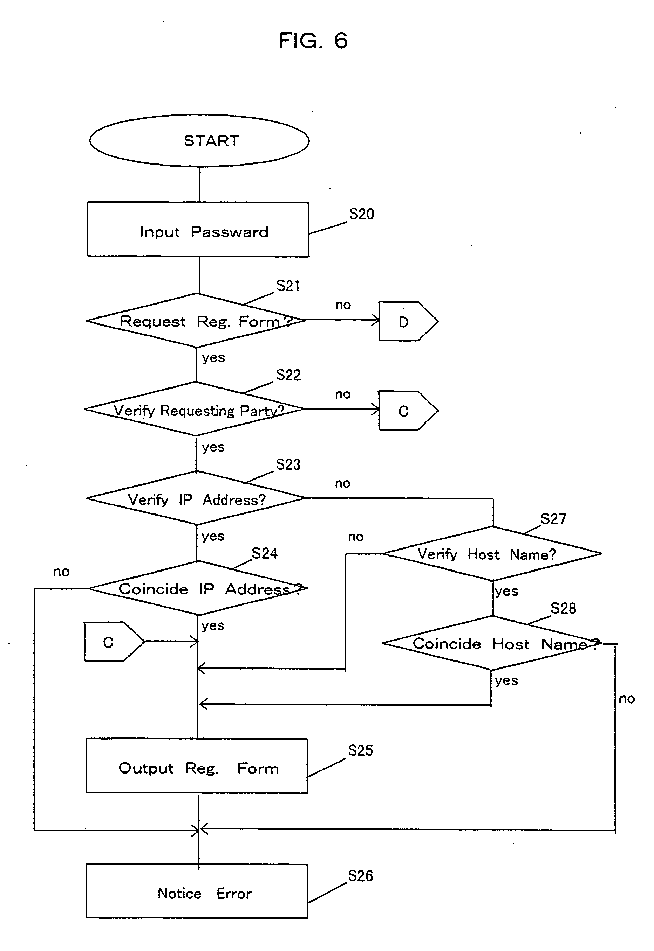

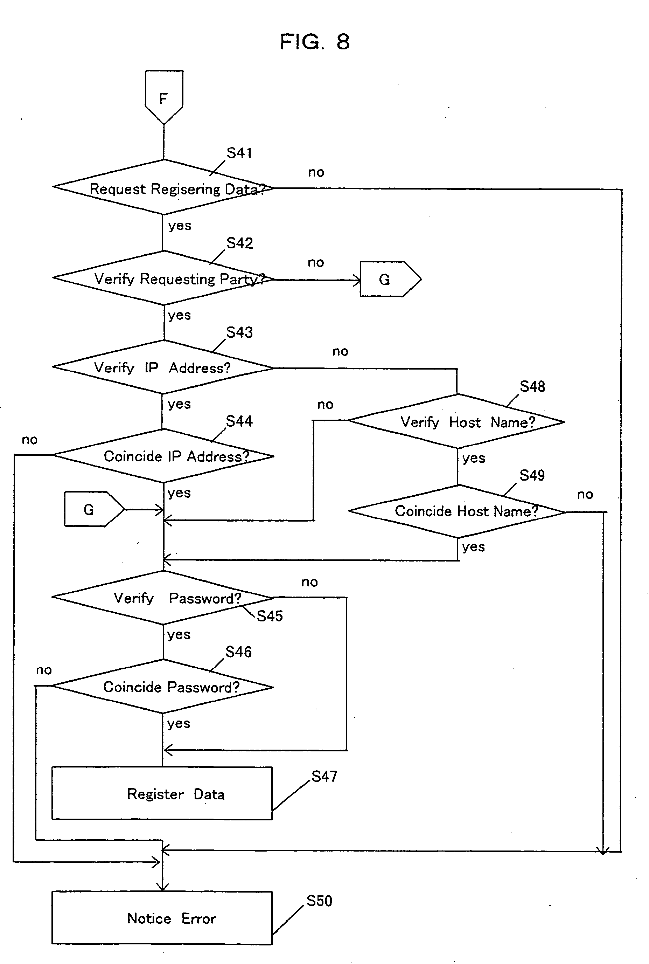

Fig. 6 - Fig. 8 are flowcharts depicting the operation of registering and reading-out the transmitter's identification. Fig. 6 is a flowchart depicting an operation of reading-out an input screen. Fig. 7 is a flowchart depicting an operation of reading-out registered data. Fig. 8 is a flowchart depicting an operation of registering the transmitter's identification.

In the first place, the operation of reading-out the input screen for registering the transmitter's identification.

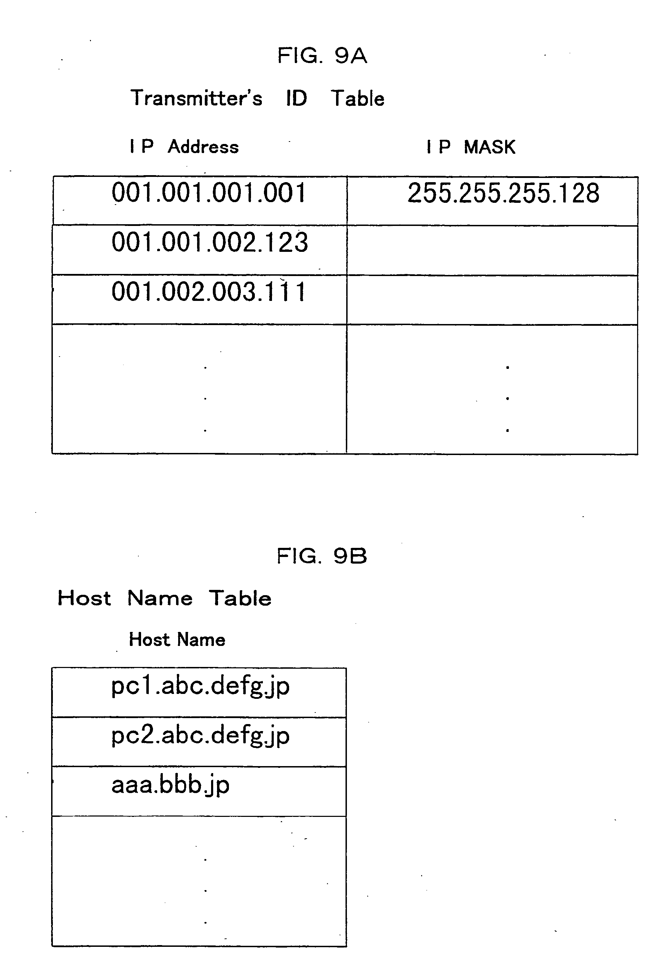

Communication device 2 has been furnished with YES/NO of necessity of verifying a requesting party before outputting a registration form. If YES has been registered at device 2, the verification by an IP address or by a host name must be registered. When the verification by the IP address is practiced, the IP address must be registered in advance at the transmitter's IDs table shown in Fig. 9A, and when the verification by the host name, the host name must be registered in advance at the host name table shown in Fig. 9B.

In Fig. 6, first, input a password in S20 (step 20), then determine whether a registration form is requested to read out or not when HTTP protocol makes a request in S21. If the protocol requests the registration form to be read out, it is determined in S22 if a verification is necessary whether a requesting party is a party already registered or not. This verification in S22 allows only a given host already registered to verify registered information or to register information, and prevents the information from being accessed by other hosts. The information security is thus secured. When the information is protected by a firewall and is perfectly protected from an access by aliens, "NO verification" is set in S22.

When "YES verification" is set in S22, determine in S23 whether the verification with an IP address is registered or not. If the verification with an IP address is registered, then determine whether an IP address of the station requesting the registration form by HTTP protocol agrees with the one already registered or not in S24. When the IP address agrees with, output the registration form in S25. When the IP address does not agree with, it is determined that an alien accesses, and then, issue an error notice or neglect the request and halt outputting the registration form in S26. The registering operation is thus not practiced.

Because the IP address is attached to the PC terminal or the server which requests the registration form, determine whether this IP address agrees with the one already registered at the transmitter's IDs table or not. This IP address agreement is determined as follows.

Assume that the IP address and IP mask already registered are the content of Fig. 9A. If the PC of which IP address is "001.001.002.123" requests an output of registration form when the IP mask is not set, this request is accepted because this IP address agrees with that registered at the transmitter's IDs table. On the other hand, if the PC of which IP address is "001.001.002.124" requests the output of registration form, this request is refused because this IP address does not agree with that registered at the transmitter's IDs table. Fig. 12A depicts this procedure.

When the IP mask is set as shown in Fig. 9A, the following process is practiced. If the PC having an IP address of "001.001.001.103" requests an output of registration form, this request is accepted because the IP address with the mask agrees with the "001.001.001" portion since the IP mask is "255.255.255.128". On the other hand, if the PC having an IP address of "001.001.001.201" requests the output of registration form, this request is refused because the IP address with the mask does not agree with the registered IP address. Fig. 12B depicts this procedure.

In Fig. 6, when the verification by IP address is not set in S23, determine in S27 whether a verification by a host name is set or not. If the verification has been set, determine whether the host name of the station requesting the output of registration form by HTTP protocol agrees with the host name already registered at the host name table shown in Fig. 9B in S28.

Assume that the host name has been registered as Fig. 9B shows. When the PC having the host name of "pc1.abe.defg.jp" requests the output of registration form as shown in Fig. 12C, this request is accepted because the host name agrees with that registered at the host name table shown in Fig. 9B. On the other hand, the PC having the host name of "pc3.abc.defg.jp" requests the output of registration form, this request is refused because the host name does not agree with that registered at the table.

When the workstation having the host name of "ws1.aaa.bbb.jp" requests the output of registration form as shown in **Fig.** 12D, this request is accepted because the domain of this host name agrees with that of the host name registered at the host name table. On the other hand, the workstation having the host name of "ws2.aab.bbb.jp" requests the output of registered name, this request is refused because the domain of this host name is not registered at the table and the host name does not agree with.

When the host name agrees with in S28, output the registration form in S25. When the host name does not agree with, issue an error notice, or neglect the request and halt outputting the registration form in S26. The registering operation is thus not practiced.

If the verification on the requesting party to be a party already registered is not needed in S22, or the verification-free on the host name has been set in S27, then output the registration form in S25.

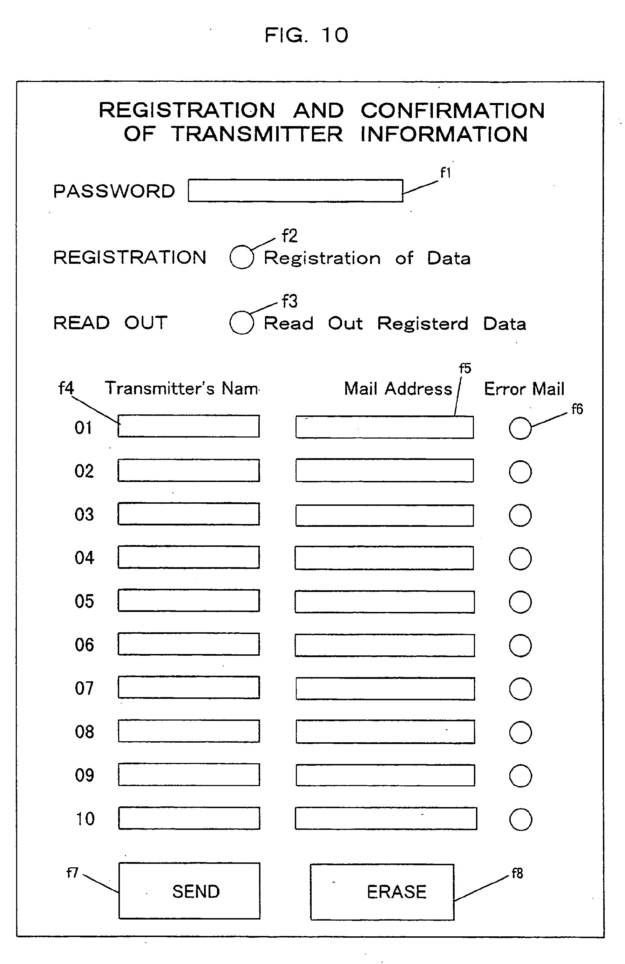

Fig. 10 depicts an embodiment of registering and verifying the form by an HTML document. In Fig. 10, "f1" indicates an input area of a password for registering and reading-out, and "f2" as well as "f3" indicates an input area for selecting one of registration or read-out. A click selects either one. Clicking "f2" selects a new registration, and clicking "f3" selects read-out of registered data. Indicated by "f4" is an area of registering/displaying a transmitter's name, and "f5" indicates an area of registering/displaying a mail-address. Indicated by "f6" is an ON/OFF switch, which sets YES/NO of necessity of changing a transmitter's mail-address of E-mail-message-transfer-protocol. Indicated by "f7" is a practicing switch for sending an input data, and "f8" is a canceling switch for erasing the input data.

When reading out registered data, set a password in the password input area indicated by "f1". Next, click the read-out area indicated by "f3", and click the practicing switch indicated by "f7". Then, registered content is read out and displayed in the registering/displaying area indicated by "f4" and mail-address registering/displaying area indicated by "f5".

When a new registration is required, set a password in the password input area indicated by "f1", and click the registering/inputting area indicated by "f2" to select "registration". Next, input a transmitter's name to the transmitter's name registering/displaying area indicated by "f4", and also input a mail-address to thE-mail-address registering/displaying area indicated by "f5". When changing thE-mail-address of transmitter of E-mail-message-transfer-protocol, click the ON/OFF switch indicated by "f6" to turn ON. Finally, click the practicing switch indicated by "f7" for completing the registration.

Next, the process of reading out the registered data is described. When the step S21 shown in Fig. 6 is not a request of registration form, move to the flowchart shown in Fig. 7 about reading out registered data.

Determine whether S31 has a request through HTTP protocol of reading out registered data or not by the input signal. If S31 has the request of reading out the registered data, determine in S32 whether verification is needed or not about a requesting party, i.e. whether the requesting party is identified as already registered party or not. If the verification is needed, determine in S33 whether verification is practiced with an IP address or not. When the verification with an IP address has been set, determine in S34 whether the IP address of the station requesting the registered data with HTTP protocol agrees with that already registered. If the IP address agrees with, determine in S35 whether verification on a password is needed or not. If the verification on the password is needed, determine in S36 whether the password notified together with the request of registered data by HTTP protocol agrees with the password already registered or not. When the password agrees with, output the registration form where the transmitter's name of "f4" and mail-address of "f5" pair with registered data in S37.

When the verification on an IP address is not needed in S33, determine whether a host name must be verified or not in S38. If the verification is needed, determine whether che host name agrees with in S39. If the host name agrees with, go to S35 where the necessity of password verification is determined. If the host name verification is not needed in S38, and the verification of requesting party is not needed in S32, go to S35 where the password is verified.

If the IP address does not agree with in S34, go to S40 provided the password does not agree with in S36 and the host name does not agree with in S39. Then, issue an error message or neglect the request, and halt outputting the registration form.

Next, a process of registering data is described hereinafter. In S31 of Fig. 7, if there is no request of reading out the registered data, go to the flowchart about registering data shown in Fig. 8.

In S41, determine whether registering data is requested or not. If registering data is requested, first of all, confirm whether a verification is needed or not, i.e. if the requesting party has been registered or not.

Respective steps from S42 to S46 are identical to S32 - S36 shown in Fig. 7, and S48 and S49 are also identical to S38 and S39 shown in Fig. 7, the description thereof are thus omitted here.

When the password agrees with in S46, or the password verification is not needed in S45, register the data in S47. On the other hand, when there is no request of registering data in S41, go to S50, then, issue an error notice and halt registering data on condition that the IP address in S44, the password in S46, and the host name in S49 would not agree with respective counterparts.

The communication device of the present invention as discussed above comprises the following elements:
(a) an image data creating section;
(b) an image data sending section for sending an image data according to a message-transfer-protocol of E-mail;
(c) a register for registering a plurality of transmitter's identifications; and
(d) an identification sending section for selecting one of the identifications and sending it through E-mail.

Using the communication device having the elements discussed above, when a transmitter sends image data by E-mail over the Internet, the transmitter puts identification in a "From: " column for each mail based on an operator's intention. A recipient then can identify the transmitter before opening a file attached to the image data. When the recipient answers thE-mail using a reply function of thE-mail-browsing-software, this communication device allows the answer-data to reach an intended person.

This structure keeps this communication device from outputting the registered data or HTML document for data input when a host other than registered one or an address other than registered IP addresses requests, according to the HTTP protocol, to read the registered image or data.

Therefore, the communication device of the present invention allows an transmitter's identification to be registered or read out only when a registered host or a registered-IP-address-holder makes a request. The identifications are thus kept in confidential to non-registered hosts and IP addresses.

## Claims

1. An Internet facsimile apparatus (2) connectable to a network, the Internet facsimile apparatus comprising:
a scanner (10) configured to scan image data;
an interface (18) configured to transmit the scanned image data attached to an e-mail to a receiving apparatus via the network, the e-mail including a mail message and a mail from command, and the scanned image data being attached to the e-mail;
a memory (8) configured to store default information of the Internet facsimile apparatus, a default e-mail address of the Internet facsimile apparatus, and a user name of at least one user of the Internet facsimile apparatus;
a panel (4) configured to select the user name of at least one user stored in the memory (8); and
a controller (3) configured to set the default e-mail address of the Internet facsimile apparatus and the default information of the Internet facsimile apparatus into the mail message of the e-mail and to set the default e-mail address of the Internet facsimile apparatus into the mail from command of the e-mail, when the user name of the user is not selected from the panel (4);
**characterized by**
the controller (3) being configured to set the default e-mail address of the Internet facsimile apparatus and the user name of the user selected from the panel (4) into the mail message of the e-mail and to set the default e-mail address of the Internet facsimile apparatus into the mail from command of the e-mail, when the user name of the user is selected from the panel (4).

2. The Internet facsimile apparatus according to claim 1, wherein the panel comprises a personal computer connected to the Internet facsimile apparatus.

3. The Internet facsimile apparatus according to claim 2, wherein the personal computer displays an HTML document for storing the information regarding an identification of the user in the memory (8).

4. The Internet facsimile apparatus according to claim 1, wherein the scanned image data attached to the e-mail is converted into a format for e-mail transmission.

5. The Internet facsimile apparatus according to claim 1, wherein the default information of the Internet facsimile apparatus and the default e-mail address of the Internet facsimile apparatus are pre-stored in the memory (8), and the information regarding the identification of the user is stored in the memory (8) by the user.

6. A method for controlling an Internet facsimile apparatus connectable to a network, the Internet facsimile apparatus scanning image data and transmitting the scanned image data attached to an e-mail to a receiving apparatus via the network, the e-mail including a mail message and a mail from command, the scanned image data being attached to the e-mail, and the Internet facsimile apparatus storing default information of the Internet facsimile apparatus, a default e-mail address of the Internet facsimile apparatus, and a selectable user name of at least one user of the Internet facsimile apparatus, the method comprising:
setting the default e-mail address of the Internet facsimile apparatus and the default information of the Internet facsimile apparatus into the mail message of the e-mail and setting the default e-mail address of the Internet facsimile apparatus into the mail from command of the e-mail, when the user name of the user is not selected; and
**characterized by**
setting the default e-mail address of the Internet facsimile apparatus and the selected user name of the user into the mail message of the e-mail and setting the default e-mail address of the Internet facsimile apparatus into the mail from command of the e-mail, when the user name of the user is selected.

7. An Internet facsimile apparatus (2) connectable to a network, the Internet facsimile apparatus comprising:
a scanner (10) configured to scan image data;
an interface (18) configured to transmit the scanned image data attached to an e-mail to a receiving apparatus via the network, the e-mail including a mail message and a mail from command, and the scanned image data being attached to the e-mail;
a memory (8) configured to store default information of the Internet facsimile apparatus and a default e-mail address of the Internet facsimile apparatus;
a panel (4) configured to input a user name of at least one user to the Internet facsimile apparatus (2); and
a controller (3) configured to set the default e-mail address of the Internet facsimile apparatus and the default information of the Internet facsimile apparatus into the mail message of the e-mail and to set the default e-mail address of the Internet facsimile apparatus into the mail from command of the e-mail, when the user name of the user is not input from the panel (4);
**characterized by**
the controller (3) being configured to set the default e-mail address of the Internet facsimile apparatus and the user name of the user input from the panel (4) into the mail message of the e-mail and to set the default e-mail address of the Internet facsimile apparatus into the mail from command of the e-mail, when the user name of the user is input from the panel (4).

8. The Internet facsimile apparatus according to claim 7, wherein the panel comprises a personal computer connected to the Internet facsimile apparatus.

9. The Internet facsimile apparatus according to claim 8, wherein the personal computer displays an HTML document for storing the information regarding an identification of the user in the memory (8).

10. The Internet facsimile apparatus according to claim 7, wherein the scanned image data attached to the e-mail is converted into a format for e-mail transmission.

11. The Internet facsimile apparatus according to claim 7, wherein the default information of the Internet facsimile apparatus and the default e-mail address of the Internet facsimile apparatus are pre-stored in the memory (8).

12. A method for controlling an Internet facsimile apparatus connectable to a network, the Internet facsimile apparatus scanning image data and transmitting the scanned image data attached to an e-mail to a receiving apparatus via the network, the e-mail including a mail message and a mail from command, the scanned image data being attached to the e-mail, and the Internet facsimile apparatus storing default information of the Internet facsimile apparatus and a default e-mail address of the Internet facsimile apparatus, the method comprising:
inputting, to the Internet facsimile apparatus, a user name of a user of the Internet facsimile apparatus;
setting the default e-mail address of the Internet facsimile apparatus and the default information of the Internet facsimile apparatus into the mail message of the e-mail and setting the default e-mail address of the Internet facsimile apparatus into the mail from command of the e-mail, when the user name of the user is not input; and
**characterized by**
setting the default e-mail address of the Internet facsimile apparatus and the input user name of the user into the mail message of the e-mail and setting the default e-mail address of the Internet facsimile apparatus into the mail from command of the e-mail, when the user name of the user is input.

13. An Internet facsimile apparatus (2) connectable to a network, the Internet facsimile apparatus comprising:
a scanner (10) configured to scan image data;
a interface (18) configured to transmit the scanned image data attached to an e-mail to a receiving apparatus via the network, the e-mail including a mail message and a mail from command, and the scanned image data being attached to e-mail;
a memory (8) configured to store a user name of a user of the communication device;
a panel (4) configured to select the user name of the user in the memory;
a controller (3) configured to set the user name of the user selected from the panel (4) into the mail message of the e-mail,
the controller (3) being further configured to output, to a predetermined host, the user name of the user, when the Internet facsimile apparatus receives, from the predetermined host, a request for outputting the user name of the user stored in the memory (8),
the controller (3) being further configured to halt outputting, to a host other than the predetermined host, the user name of the user, when the Internet facsimile apparatus receives, from the host other than the predetermined host, a request for outputting the user name of the user stored in the memory (8).

## Patentansprüche

1. Internetfaxgerät (2), das mit einem Netzwerk verbunden werden kann, wobei das Internetfaxgerät umfasst:
einen Scanner (10), der dafür ausgelegt ist, Bilddaten zu scannen;
eine Schnittstelle (18), die dafür ausgelegt ist, die an ein E-Mail angehängten gescannten Bilddaten über das Netzwerk an ein Empfangsgerät zu übertragen, wobei das E-Mail eine Mail-Nachricht und einen Mail-von-Befehl beinhaltet und die gescannten Bilddaten an das E-Mail angehängt sind;
einen Speicher (8), der dafür ausgelegt ist, Voreinstellungsinformation des Internetfaxgerätes, eine Voreinstellungs-E-Mail-Adresse des Internetfaxgerätes und einen Nutzernamen wenigstens eines Nutzers des Internetfaxgerätes zu speichern;
eine Bedieneinheit (4), die dafür ausgelegt ist, den in dem Speicher (8) gespeicherten Nutzernamen wenigstens eines Nutzers auszuwählen; und eine Steuerung (3), die dafür ausgelegt ist, die Voreinstellungs-E-Mail-Adresse des Internetfaxgerätes und die Voreinstellungsinformation des Internetfaxgerätes in die Mail-Nachricht des E-Mails einzusetzen und die Voreinstellungs-E-Mail-Adresse des Internetfaxgerätes in den Mail-von-Befehl des E-Mails einzusetzen, wenn der Nutzername des Nutzers nicht von der Bedieneinheit (4) ausgewählt ist;
**dadurch gekennzeichnet, dass**
die Steuerung (3) dafür ausgelegt ist, die Voreinstellungs-E-Mail-Adresse des Internetfaxgerätes und den von der Bedieneinheit (4) ausgewählten Nutzernamen des Nutzers in die Mail-Nachricht des E-Mails einzusetzen und die Voreinstellungs-E-Mail-Adresse des Internetfaxgerätes in den Mail-von-Befehl des E-Mails einzusetzen, wenn der Nutzername des Nutzers von der Bedieneinheit (4) ausgewählt ist.

2. Internetfaxgerät nach Anspruch 1, wobei die Bedieneinheit einen Personalcomputer umfasst, der mit dem Internetfaxgerät verbunden ist.

3. Internetfaxgerät nach Anspruch 2, wobei der Personalcomputer ein HTML-Dokument zum Speichern der Information im Zusammenhang mit einer Identifikation des Nutzers in dem Speicher (8) anzeigt.

4. Internetfaxgerät nach Anspruch 1, wobei die an das E-Mail angehängten gescannten Bilddaten in ein Format zur E-Mail-Übertragung umgewandelt werden.

5. Internetfaxgerät nach Anspruch 1, wobei die Voreinstellungsinformation des Internetfaxgerätes und die Voreinstellungs-E-Mail-Adresse des Internetfaxgerätes in dem Speicher (8) vorab gespeichert werden und die Information im Zusammenhang mit der Identifikation des Nutzers von dem Nutzer in dem Speicher (8) gespeichert wird.

6. Verfahren zum Steuern eines Internetfaxgerätes, das mit einem Netzwerk verbunden werden kann, wobei das Internetfaxgerät Bilddaten scannt und die an ein E-Mail angehängten gescannten Bilddaten über das Netzwerk an ein Empfangsgerät überträgt, wobei das E-Mail eine Mail-Nachricht und einen Mail-von-Befehl beinhaltet, die gescannten Bilddaten an das E-Mail angehängt werden und das Internetfaxgerät Voreinstellungsinformation des Internetfaxgerätes, eine Voreinstellungs-E-Mail-Adresse des Internetfaxgerätes und einen auswählbaren Nutzernamen wenigstens eines Nutzers des Internetfaxgerätes speichert, wobei das Verfahren umfasst:
Einsetzen der Voreinstellungs-E-Mail-Adresse des Internetfaxgerätes und der Voreinstellungsinformation des Internetfaxgerätes in die Mail-Nachricht des E-Mails und Einsetzen der Voreinstellungs-E-Mail-Adresse des Internetfaxgerätes in den Mail-von-Befehl des E-Mails, wenn der Nutzername des Nutzers nicht ausgewählt ist;
**gekennzeichnet durch**
Einsetzen der Voreinstellungs-E-Mail-Adresse des Internetfaxgerätes und des ausgewählten Nutzernamens des Nutzers in die Mail-Nachricht des E-Mails und Einsetzen der Voreinstellungs-E-Mail-Adresse des Internetfaxgerätes in den Mail-von-Befehl des E-Mails, wenn der Nutzername des Nutzers ausgewählt ist.

7. Internetfaxgerät (2), das mit einem Netzwerk verbunden werden kann, wobei das Internetfaxgerät umfasst:
einen Scanner (10), der dafür ausgelegt ist, Bilddaten zu scannen;
eine Schnittstelle (18), die dafür ausgelegt ist, die an ein E-Mail angehängten gescannten Bilddaten über das Netzwerk an ein Empfangsgerät zu übertragen,
wobei das E-Mail eine Mail-Nachricht und einen Mail-von-Befehl beinhaltet und die gescannten Bilddaten an das E-Mail angehängt sind;
einen Speicher (8), der dafür ausgelegt ist, Voreinstellungsinformation des Internetfaxgerätes und eine Voreinstellungs-E-Mail-Adresse des Internetfaxgerätes zu speichern;
eine Bedieneinheit (4), die dafür ausgelegt ist, einen Nutzernamen wenigstens eines Nutzers in das Internetfaxgerät (2) einzugeben; und
eine Steuerung (3), die dafür ausgelegt ist, die Voreinstellungs-E-Mail-Adresse des Internetfaxgerätes und die Voreinstellungsinformation des Internetfaxgerätes in die Mail-Nachricht des E-Mails einzusetzen und die Voreinstellungs-E-Mail-Adresse des Internetfaxgerätes in den Mail-von-Befehl des E-Mails einzusetzen, wenn der Nutzername des Nutzers nicht von der Bedieneinheit (4) eingegeben ist;
**dadurch gekennzeichnet, dass**
die Steuerung (3) dafür ausgelegt ist, die Voreinstellungs-E-Mail-Adresse des Internetfaxgerätes und den von der Bedieneinheit (4) eingegebenen Nutzernamen des Nutzers in die Mail-Nachricht des E-Mails einzusetzen und die Voreinstellungs-E-Mail-Adresse des Internetfaxgerätes in den Mail-von-Befehl des E-Mails einzusetzen, wenn der Nutzername des Nutzers von der Bedieneinheit (4) eingegeben ist.

8. Internetfaxgerät nach Anspruch 7, wobei die Bedieneinheit einen Personalcomputer umfasst, der mit dem Internetfaxgerät verbunden ist.

9. Internetfaxgerät nach Anspruch 8, wobei der Personalcomputer ein HTML-Dokument zum Speichern der Information im Zusammenhang mit einer Identifikation des Nutzers in dem Speicher (8) anzeigt.

10. Internetfaxgerät nach Anspruch 7, wobei die an das E-Mail angehängten gescannten Bilddaten in ein Format zur E-Mail-Übertragung umgewandelt werden.

11. Internetfaxgerät nach Anspruch 7, wobei die Voreinstellungsinformation des Internetfaxgerätes und die Voreinstellungs-E-Mail-Adresse des Internetfaxgerätes in dem Speicher (8) vorab gespeichert werden.

12. Verfahren zum Steuern eines Internetfaxgerätes, das mit einem Netzwerk verbunden werden kann, wobei das Internetfaxgerät Bilddaten scannt und die an ein E-Mail angehängten gescannten Bilddaten über das Netzwerk an ein Empfangsgerät überträgt, wobei das E-Mail eine Mail-Nachricht und einen Mail-von-Befehl beinhaltet, die gescannten Bilddaten an das E-Mail angehängt werden und das Interneifaxgerät Voreinstellungsinformation des Internetfaxgerätes und eine Voreinstellungs-E-Mail-Adresse des Internetfaxgerätes speichert, wobei das Verfahren umfasst:
in das Interneifaxgerät erfolgendes Eingeben eines Nutzernamens eines Nutzers des Internetfaxgerätes;
Einsetzen der Voreinstellungs-E-Mail-Adresse des Internelfaxgerätes und der Voreinstellungsinformation des Internetfaxgerätes in die Mail-Nachricht des E-Mails und Einsetzen der Voreinstellungs-E-Mail-Adresse des Internetfaxgerätes in den Mail-von-Befehl des E-Mails, wenn der Nutzername des Nutzers nicht eingegeben ist;
**gekennzeichnet durch**
Einsetzen der Voreinstellungs-E-Mail-Adresse des Internetfaxgerätes und des eingegebenen Nutzernamens des Nutzers in die Mail-Nachricht des E-Mails und Einsetzen der Voreinstellungs-E-Mail-Adresse des Internetfaxgerätes in den Mail-von-Befehl des E-Mails, wenn der Nutzername des Nutzers eingegeben ist.

13. Internetfaxgerät (2), das mit einem Netzwerk verbunden werden kann, wobei das Internetfaxgerät umfasst:
einen Scanner (10), der dafür ausgelegt ist, Bilddaten zu scannen;
eine Schnittstelle (18), die dafür ausgelegt ist, die an ein E-Mail angehängten gescannten Bilddaten über das Netzwerk an ein Empfangsgerät zu übertragen, wobei das E-Mail eine Mail-Nachricht und einen Mail-von-Befehl beinhaltet und die gescannten Bilddaten an das E-Mail angehängt sind;
einen Speicher (8), der dafür ausgelegt ist, einen Nutzernamen eines Nutzers der Kommunikationsvorrichtung zu speichern;
eine Bedieneinheit (4), die dafür ausgelegt ist, den Nutzernamen des Nutzers in dem Speicher auszuwählen; und
eine Steuerung (3), die dafür ausgelegt ist, den von der Bedieneinheit (4) ausgewählten Nutzernamen des Nutzers in die Mail-Nachricht des E-Mails einzusetzen;
wobei
die Steuerung (3) des Weiteren dafür ausgelegt ist, an einen vorbestimmten Host den Nutzernamen des Nutzers auszugeben, wenn das Internetfaxgerät von dem vorbestimmten Host eine Aufforderung zum Ausgeben des in dem Speicher (8) gespeicherten Nutzernamens des Nutzers empfängt, und
die Steuerung (3) des Weiteren dafür ausgelegt ist, das an einen Host, der nicht der vorbestimmte Host ist, erfolgende Ausgeben des Nutzernamens des Nutzers anzuhalten, wenn das Internetfaxgerät von dem Host, der nicht der vorbestimmte Host ist, eine Aufforderung zum Ausgeben des in dem Speicher (8) gespeicherten Nutzernamens des Nutzers empfängt.

## Revendications

1. Appareil de télécopie par Internet (2) connectable à un réseau, l'appareil de télécopie par Internet comprenant :
un balayeur (10) configuré pour balayer des données d'image ;
une interface (18) configurée pour transmettre les données d'image balayées en annexe à un courriel vers un appareil récepteur via le réseau, le courriel comprenant un message et une commande d'adresse d'expéditeur - ou commande Mail From - et les données d'image balayées étant annexées au courriel ;
une mémoire (8) configurée pour enregistrer des informations par défaut de l'appareil de télécopie par Internet, une adresse de courriel par défaut de l'appareil de télécopie par Internet et un nom d'utilisateur d'au moins un utilisateur de l'appareil de télécopie par Internet ;
un panneau (4) configuré pour sélectionner le nom d'au moins un utilisateur enregistré dans la mémoire (8) ; et un contrôleur (3) configuré pour assigner l'adresse de courriel par défaut de l'appareil de télécopie par Internet et les informations par défaut de l'appareil de télécopie par Internet dans le message du courriel et pour assigner l'adresse de courriel par défaut de l'appareil de télécopie par Internet dans la commande d'adresse d'expéditeur du courriel lorsque le nom de l'utilisateur n'est pas sélectionné via le panneau (4) ;
**caractérisé en ce que**
le contrôleur (3) est configuré pour assigner l'adresse de courriel par défaut de l'appareil de télécopie par Internet et le nom de l'utilisateur sélectionné via le panneau (4) dans le message du courriel et pour assigner l'adresse de courriel par défaut de l'appareil de télécopie par Internet dans la commande d'adresse d'expéditeur du courriel lorsque le nom de l'utilisateur est sélectionné via le panneau (4).

2. Appareil de télécopie par Internet selon la revendication 1, dans lequel le panneau comprend un ordinateur personnel connecté à l'appareil de télécopie par Internet.

3. Appareil de télécopie par Internet selon la revendication 2, dans lequel l'ordinateur personnel affiche un document HTML pour enregistrer les informations concernant une identification de l'utilisateur dans la mémoire (8).

4. Appareil de télécopie par Internet selon la revendication 1, dans lequel les données d'image balayées annexées au courriel sont converties selon un format de transmission par courriel.

5. Appareil de télécopie par Internet selon la revendication 1, dans lequel les informations par défaut de l'appareil de télécopie par Internet et l'adresse de courriel par défaut de l'appareil de télécopie par Internet sont préenregistrées dans la mémoire (8) et dans lequel les informations concernant l'identification de l'utilisateur sont enregistrées dans la mémoire (8) par l'utilisateur.

6. Procédé de commande d'un appareil de télécopie par Internet connectable à un réseau, l'appareil de télécopie par Internet balayant des données d'image et transmettant les données d'image balayées en annexe à un courriel vers un appareil récepteur via le réseau, le courriel comprenant un message et une commande d'adresse d'expéditeur, les données d'image balayées étant annexées au courriel et l'appareil de télécopie par Internet enregistrant des informations par défaut de l'appareil de télécopie par Internet, une adresse de courriel par défaut de l'appareil de télécopie par Internet et un nom d'utilisateur sélectionnable d'au moins un utilisateur de l'appareil de télécopie par Internet, le procédé comprenant :
l'assignation de l'adresse de courriel par défaut de l'appareil de télécopie par Internet et des informations par défaut de l'appareil de télécopie par Internet dans le message du courriel et l'assignation de l'adresse de courriel par défaut de l'appareil de télécopie par Internet dans la commande d'adresse d'expéditeur du courriel lorsque le nom de l'utilisateur n'est pas sélectionné ; et
**caractérisé par**
l'assignation de l'adresse de courriel par défaut de l'appareil de télécopie par Internet et du nom de l'utilisateur sélectionné dans le message du courriel et l'assignation de l'adresse de courriel par défaut de l'appareil de télécopie par Internet dans la commande d'adresse d'expéditeur du courriel lorsque le nom de l'utilisateur est sélectionné.

7. Appareil de télécopie par Internet (2) connectable à un réseau, l'appareil de télécopie par Internet comprenant :
un balayeur (10) configuré pour balayer des données d'image ;
une interface (18) configurée pour transmettre les données d'image balayées en annexe à un courriel vers un appareil récepteur via le réseau, le courriel comprenant un message et une commande d'adresse d'expéditeur, et les données d'image balayées étant annexées au courriel ;
une mémoire (8) configurée pour enregistrer des informations par défaut de l'appareil de télécopie par Internet et une adresse de courriel par défaut de l'appareil de télécopie par Internet ;
un panneau (4) configuré pour introduire le nom d'au moins un utilisateur dans l'appareil de télécopie par Internet (2) ; et un contrôleur (3) configuré pour assigner l'adresse de courriel par défaut de l'appareil de télécopie par Internet et les informations par défaut de l'appareil de télécopie par Internet dans le message du courriel et pour assigner l'adresse de courriel par défaut de l'appareil de télécopie par Internet dans la commande d'adresse d'expéditeur du courriel lorsque le nom de l'utilisateur n'est pas introduit via le panneau (4) ;
**caractérisé en ce que**
le contrôleur (3) est configuré pour assigner l'adresse de courriel par défaut de l'appareil de télécopie par Internet et le nom de l'utilisateur introduit via le panneau (4) dans le message du courriel et pour assigner l'adresse de courriel par défaut de l'appareil de télécopie par Internet dans la commande d'adresse d'expéditeur du courriel lorsque le nom de l'utilisateur est introduit via le panneau (4).

8. Appareil de télécopie par Internet selon la revendication 7, dans lequel le panneau comprend un ordinateur personnel connecté à l'appareil de télécopie par Internet.

9. Appareil de télécopie par Internet selon la revendication 8, dans lequel l'ordinateur personnel affiche un document HTML pour enregistrer les informations concernant une identification de l'utilisateur dans la mémoire (8).

10. Appareil de télécopie par Internet selon la revendication 7, dans lequel les données d'image balayées annexées au courriel sont converties selon un format de transmission par courriel.

11. Appareil de télécopie par Internet selon la revendication 7, dans lequel les informations par défaut de l'appareil de télécopie par Internet et l'adresse de courriel par défaut de l'appareil de télécopie par Internet sont préenregistrées dans la mémoire (8).

12. Procédé de commande d'un appareil de télécopie par Internet connectable à un réseau, l'appareil de télécopie par Internet balayant des données d'image et transmettant les données d'image balayées en annexe à un courriel vers un appareil récepteur via le réseau, le courriel comprenant un message et une commande d'adresse d'expéditeur, les données d'image balayées étant annexées au courriel et l'appareil de télécopie par Internet enregistrant des informations par défaut de l'appareil de télécopie par Internet et une adresse de courriel par défaut de l'appareil de télécopie par Internet, le procédé comprenant :
l'introduction dans l'appareil de télécopie par Internet du nom d'un utilisateur de l'appareil de télécopie par Internet ;
l'assignation de l'adresse de courriel par défaut de l'appareil de télécopie par Internet et les informations par défaut de l'appareil de télécopie par Internet dans le message du courriel, et l'assignation de l'adresse de courriel par défaut de l'appareil de télécopie par Internet dans la commande d'adresse d'expéditeur du courriel lorsque le nom de l'utilisateur n'est pas introduit ; et
**caractérisé par**
l'assignation de l'adresse de courriel par défaut de l'appareil de télécopie par Internet et l'introduction du nom de l'utilisateur dans le message du courriel, et l'assignation de l'adresse de courriel par défaut de l'appareil de télécopie par Internet dans la commande d'adresse d'expéditeur du courriel lorsque le nom de l'utilisateur est introduit.

13. Appareil de télécopie par Internet (2) connectable à un réseau, l'appareil de télécopie par Internet comprenant :
un balayeur (10) configuré pour balayer des données d'image ;
une interface (18) configurée pour transmettre les données d'image balayées en annexe à un courriel vers un appareil récepteur via le réseau, le courriel comprenant un message et une commande d'adresse d'expéditeur et les données d'image balayées étant annexées au courriel ;
une mémoire (8) configurée pour enregistrer le nom d'un utilisateur du dispositif de communication ;
un panneau (4) configuré pour sélectionner le nom de l'utilisateur dans la mémoire ;
un contrôleur (3) configuré pour assigner le nom de l'utilisateur sélectionné via le panneau (4) dans le message du courriel,
le contrôleur (3) étant en outre configuré pour fournir le nom de l'utilisateur à un hôte prédéterminé lorsque l'appareil de télécopie par Internet reçoit de l'hôte prédéterminé une demande pour fournir le nom de l'utilisateur enregistré dans la mémoire (8),
le contrôleur (3) étant en outre configuré pour arrêter de fournir le nom de l'utilisateur à un hôte autre que l'hôte prédéterminé lorsque l'appareil de télécopie par Internet reçoit dudit l'hôte autre que l'hôte prédéterminé une demande pour fournir le nom de l'utilisateur enregistré dans la mémoire (8).
